# EUROPÄISCHE PATENTSCHRIFT

(11) **EP 2 651 692 B1**
(45) Veröffentlichungstag und Bekanntmachung des Hinweises auf die Patenterteilung: **17.08.2016**
(21) Anmeldenummer: 11813868.4
(22) Anmeldetag: 15.12.2011
(51) Int. Cl.: B60N 2/427, B60N 2/48

(54) **KOPFSTÜTZE EINES FAHRZEUGSITZES**
HEAD-REST OF A VEHICLE SEAT
APPUI-TÊTE D'UN SIÈGE DE VÉHICULE

(30) Priorität: 15.12.2010 DE 102010054651
(43) Veröffentlichungstag der Anmeldung: 23.10.2013
(73) Patentinhaber: Hochschule Kaiserslautern, 67657 Kaiserslautern (DE); Universität des Saarlandes, 66123 Saarbrücken (DE); Hochschule Fresenius, 65510 Idstein (DE)
(72) Erfinder: GÄNG, Lutz-Achim, 74081 Heilbronn (DE); MÜNCH, Peter, F-57620 Goetzenbruck (FR); FELDER, Hanno, 66123 Saarbrücken (DE); KRICK, Christoph, 66424 Homburg (DE); SCHLÜTER, Sebastian, 66482 Zweibrücken (DE); SCHAAL, Benjamin, 66482 Zweibrücken (DE); KALKA, Frank, 66740 Saarlouis (DE); OTTE, Michael, 66482 Zweibrücken (DE); GOUTIER, Ralf, 66955 Pirmasens (DE); ZIMMER, Markus, 66538 Neunkirchen (DE); WAIZ, Vera, 66482 Zweibrücken (DE); SCHATKE, Paul, 66482 Zweibrücken (DE); EHMER, Susanne, 76863 Herxheim (DE); MEYER, Stefan, 66453 Gersheim (DE); KLEIN, Frank, 66793 Reisbach (DE)
(74) Vertreter: Patentanwälte Dr. Keller, Schwertfeger
(86) Internationale Anmeldenummer: PCT/EP2011/006345
(87) Internationale Veröffentlichungsnummer: WO 2012/079762

(56) Entgegenhaltungen:
- EP-A2- 0 142 822
- DE-A1- 4 335 778
- FR-A1- 2 729 621

## Beschreibung

### Technisches Gebiet:

Die Erfindung betrifft eine Kopfstütze für einen Fahrzeugsitz gemäß dem Oberbegriff des Patentanspruchs 1.

### Stand der Technik:

Eine häufige Verletzungsart bei Kraftfahrzeugunfällen, insbesondere bei Auffahrunfällen, stellt das Halswirbelsäulen-Schleudertrauma (HWS-Schleudertrauma) dar. Ursache hierfür ist, dass es bei einem Unfall durch die schlagartige Beschleunigung der Fahrzeuginsassen in Fahrrichtung zu einer extremen Extensionsbewegung des Kopfes kommt, die von einer zeitgleichen Dreh- und Taumelbewegung um zumeist mehrere Raumachsen überlagert wird. In der Folge wird die obere wirbelnahe Nackenmuskulatur überdehnt, was schließlich zu dem genannten HWS-Schleudertrauma führt.

Um dieser mehrachsigen Taumelbewegung entgegenzuwirken, ist aus der DE 195 09 014 eine Kopfstütze bekannt, bei der zur Stabilisierung des Kopfes obere und seitliche Stützkörper in Fahrtrichtung ausgefahren werden. Die Aktivierung der Stützkörper erfolgt über einen externen Antrieb, der von einer Auslösesensorik in Gang gesetzt wird. Als nachteilig erweist sich dabei der durch den externen Antrieb einschließlich der dazugehörigen Komponenten bedingte konstruktive Mehraufwand, der zu einer Verteuerung der Kopfstütze führt. Da die zusätzlichen Komponenten in der Kopfstütze bzw. dem Fahrzeugsitz untergebracht werden müssen, ist die erstrebenswerte Realisierung einer Kopfstütze bzw. des Fahrzeugsitzes mit kompaktem Aufbau problematisch.

Aus der EP 0 142 822 A2 ist eine Kopfstütze bekannt, die zwei im Inneren eines Polsterbezugs schwenkbar angeordneten Hebel aufweist, wobei die Hebel aus einer ersten Endstellung unter Mitnahme des Polsterüberzugs in eine zweite Endstellung schwenkbar sind. In der zweiten Endstellung bilden der Hebel und der Polsterüberzug einen zumindest den hinteren Teil und die beiden Seiten des Kopfes umgebenden Helm.

### Darstellung der Erfindung:

Vor diesem Hintergrund liegt der Erfindung die Aufgabe zugrunde, eine Kopfstütze für einen Fahrzeugsitz anzugeben, mit der das Verletzungsrisiko für die Fahrzeuginsassen im Falle eines Zusammenstoßes zweier Fahrzeuge effektiv und mit wirtschaftlich vertretbarem Aufwand weiter vermindert wird.

Diese Aufgabe wird durch eine Kopfstütze mit den Merkmalen des Patentanspruchs 1 gelöst.

Vorteilhafte Ausführungsformen ergeben sich aus den Unteransprüchen.

Der Grundgedanke der Erfindung besteht darin, die kinetische Energie des Kopfes beim Eintauchen in eine Kopfstütze durch geeignete Mittel aufzunehmen und unmittelbar in Antriebsenergie zur Erzeugung seitlicher Stützflächen umzuwandeln. Die Erfindung begnügt sich also nicht mit der bloßen Absorption schädlicher kinetischer Energie, wie es bei gebräuchlichen Kopfstützen der Fall ist, sondern nutzt die kinetische Energie für die Einleitung aktiver Schutzmaßnahmen für die Fahrzeuginsassen wie das Erzeugen seitlicher Stützflächen.

Die erfindungsgemäße Umsetzung dieses Grundgedankens sieht innerhalb einer erfindungsgemäßen Kopfstütze eine kinematische Kopplung energieabsorbierender und dabei sich verformender Funktionskomponenten mit Funktionskomponenten zum Aufbau seitlicher Stützflächen vor. Die kinematische Kopplung kann dabei derart sein, dass die Absorption der kinetischen Energie und die Erzeugung von seitlichen Stützflächen innerhalb ein und derselben Funktionskomponente erfolgt. Im Rahmen der Erfindung liegen jedoch auch Ausführungen, bei denen die beschriebenen Funktionen mehreren Funktionskomponenten zugeordnet sind und die beispielsweise über ein kraftübertragendes Medium in direkter Wirkverbindung miteinander stehen.

Daraus ergibt sich als erster Vorteil der Erfindung eine völlig energieautarke Funktionsweise der Kopfstütze. Da die Energie für den Aufbau der seitlichen Stützflächen aus der kinetischen Energie des Kopfes beim Eintauchen in die Kopfstütze stammt, ist eine Zufuhr von Fremdenergie nicht notwendig.

Durch die kinematische Kopplung der einzelnen Funktionseinheiten kann zudem auf eine aufwändige Sensorik und Steuerungseinrichtung verzichtet werden. Dadurch vereinfacht sich der Aufbau einer erfindungsgemäßen Kopfstütze erheblich und erlaubt deren kostengünstige und kompakte Herstellung. Die Einfachheit der Konstruktion führt zudem zu einer hohen Funktionssicherheit, da die Anzahl möglicher Störquellen aufgrund der geringen Anzahl von Teilen von Haus aus begrenzt ist.

Ein weiterer Vorteil der Erfindung ergibt sich aus dem unmittelbaren Aufbau der seitlichen Stützflächen bereits zu Beginn des Eintauchens eines Kopfes in die Kopfstütze. Die sich daraus ergebende völlig verzögerungsfreie Funktionsweise gewährleistet, dass sich die Schutzwirkung der seitlichen Stützbereiche sehr früh und daher äußerst effektiv entfalten kann.

Ein erster Teil der erfindungsgemäßen Ausführungsformen der Erfindung basiert auf der Ausnutzung des Fin Ray Effekts. Dabei wird allein durch eine besondere fachwerkartige Ausgestaltung eine Stützstruktur geschaffen, deren freie Enden sich bei einer Verformung des zentralen Bereichs entgegen der Verformungsrichtung bewegen und dabei seitliche Stützflächen erzeugen. Diese Art der Umsetzung der Erfindung ist folglich ohne großen Aufwand ausführbar und hat zudem den Vorteil, dass sich die seitlichen Stützflächen selbsttätig an die Kontur des Kopfes und damit dessen jeweiligen Lage anpassen. Daraus resultiert eine vergleichmäßigte und daher verminderte Druckverteilung auf den Kopf eines Fahrzeuginsassen.

Bei einer vorteilhaften Ausführungsform der Erfindung umfasst die fachwerkartige Stützstruktur einen vorderen Stützgurt und einen hinteren Stützgurt, die sich gegenüberliegen und an ihren sich zugewandten Enden im spitzen Winkel β miteinander verbunden sind, während die beiden übrigen Enden in gegenseitigem Abstand enden. Über gelenkig gelagerte Querstreben sind die beiden Stützgurte miteinander verbunden. Dabei nehmen die Querstreben gegenüber dem Vordergurt vorteilhafterweise eine Schrägstellung ein, das heiß sind in einem Winkel α gegenüber dem vorderen Stützgurt geneigt.

Die Wahl des Winkels β hat dabei Einfluss auf das Ausmaß der durch eine Verformung hervorgerufene Gegenbewegung der Stützflächen und die durch die Verformung in der Stützstruktur erzeugten Spannungen. Bei kleinen Winkeln β kommt es zu einer großen Gegenbewegung und hohen Materialspannungen. Hingegen bewirken große Winkel β kleinere induzierte Gegenbewegungen bei geringerer Materialbeanspruchung. Durch geeignete Wahl des Winkels β kann also sowohl die Bewegung der Stützflächen als auch die dabei hervorgerufenen Materialbeanspruchen bestimmt werden. Unter Berücksichtigung dieser Zusammenhänge haben sich Winkel β im Bereich von 10° bis 25°, vorzugsweise von 15° bis 20° als zweckmäßig heraus gestellt.

Über den Winkel α kann Einfluss auf das Verformungsverhalten der Stützstruktur über ihre Längserstreckung genommen werden. Kleine Winkel α führen zu größeren Krümmungen der beiden Stützgurte, große Winkel α zu kleineren Krümmungen. Durch geeignete Variation des Winkels α kann also das Profil der seitlichen Stützflächen vorgegeben werden. Beispielsweise kann der Winkel α benachbarter Querstreben abnehmen, wodurch sich die freien Enden der seitlichen Stützflächen zusätzlich krümmen und so die Stützwirkung bis an den Rand der Stützflächen aufrecht erhalten bleibt. Winkel α im Bereich von 30° bis 75°, vorzugsweise von 40° bis 65° haben sich als geeignet erwiesen.

In vorteilhafter Weiterbildung der Erfindung ist eine solche Stützstruktur symmetrisch zur Medianebene eines Fahrzeuginsassen ausgebildet und höchstvorzugsweise mit einem Synchronisationsmechanismus ausgestattet. Der Synchronisationsmechanismus gewährleistet eine symmetrische Verformung der Stützstruktur bezüglich der Symmetrie selbst dann, wenn der Kopf eines Fahrzeuginsassen nicht zentrisch auf die Kopfstütze trifft, also Medianebene und Symmetrieebene nicht zusammenfallen.

Bei den beschriebenen Ausführungsformen können alle oder ein Teil der zwischen Stützgurten und Querstreben gebildeten Räume mit einem energieabsorbierenden Material gefüllt sein, um den zeitlichen Bewegungsablauf zu steuern.

Andere Ausführungsformen der Erfindung sehen eine fluidbasierte Kopplung unterschiedlicher Funktionskomponenten vor. Dabei wird durch das Eintauchen des Kopfes in eine erste Funktionseinheit eine Fluidströmung erzeugt, die eine Bewegung zumindest einer weiteren Funktionseinheit bewirkt, mit der seitliche Stützflächen an der Kopfstütze aufgebaut werden. Durch die Verwendung eines Fluids mit geeigneter Viskosität sowie eine entsprechende Auswahl der Leitungsquerschnitte für das Fluid kann Einfluss auf die Geschwindigkeit der Bewegungsabläufe genommen werden.

### Kurze Beschreibung der Zeichnungen:

Die Erfindung wird nachstehend anhand eines in den Zeichnungen dargestellten Ausführungsbeispiels näher erläutert, wobei weitere Merkmale und Vorteile der Erfindung offenbar werden.

Es zeigt
- Fig. 1a: eine Schrägansicht auf eine erfindungsgemäße Kopfstütze mit davor angeordnetem Kopf eines Fahrzeuginsassen vor Eintritt eines Unfallereignisses,
- Fig. 1b: die in Fig. 1a dargestellte Kopfstütze mit Fahrzeuginsasse während des Unfallereignisses,
- Fig. 2: einen Horizontalschnitt durch eine erste Ausführungsform einer erfindungsgemäßen Kopfstütze,
- Fig. 3: eine Schrägansicht auf die in Fig. 2 dargestellte Kopfstütze,
- Fig. 4: eine Schrägansicht auf eine fachwerkartige Stützstruktur, die in die Kopfstütze gemäß der Fig. 2 und 3 integriert ist,
- Fig. 5: eine Schrägansicht auf eine zweite Ausführungsform einer erfindungsgemäßen Kopfstütze in halb aufgebrochener Darstellung,
- Fig. 6: eine Schrägansicht auf eine Stützstruktur, die in die Kopfstütze gemäß Fig. 5 integriert ist,
- Fig. 7: eine Draufsicht auf die in Fig. 6 dargestellte Stützstruktur,
- Fig. 8: eine Schrägansicht der in Fig. 6 dargestellten Stützstruktur, ergänzt um Synchronisationsmittel,
- Fig. 9: eine Draufsicht auf die in Fig. 8 dargestellte Stützstruktur,
- Fig. 10: eine Draufsicht auf die in Fig. 6 dargestellte Stützstruktur, ergänzt durch Dämpfungsmittel,
- Fig. 11: eine Schrägansicht auf eine weitere, fluidbasierte Ausführungsform einer erfindungsgemäßen Kopfstütze in halb aufgebrochener Darstellung vor Eintritt des Unfallereignisses,
- Fig. 12: die in Fig. 11 dargestellte Kopfstütze während des Unfallereignisses,
- Fig. 13: einen Horizontalschnitt durch eine zusätzliche fluidbasierte Ausführungsform einer erfindungsgemäßen Kopfstütze und
- Fig. 14: ein Detail des in Fig. 13 mit XIV gekennzeichneten Bereichs.

### Wege zur Ausführung der Erfindung und gewerbliche Verwertbarkeit:

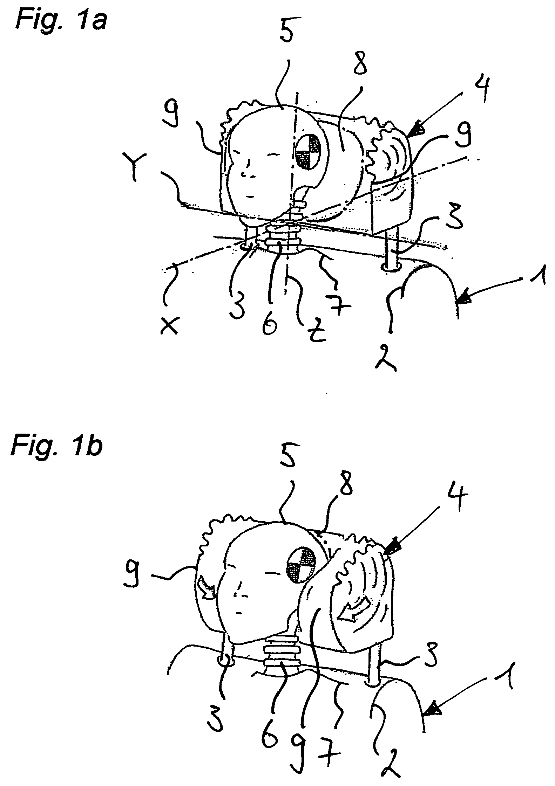

Fig. 1a zeigt den oberen Bereich eines Fahrzeugsitzes 1, aus dessen Rückenlehne 2 zwei Haltestäbe 3 zur Befestigung einer erfindungsgemäßen Kopfstütze 4 ragen. Vor der Kopfstütze 4 sieht man den Kopf 5 mit Halswirbelsäule 6 eines Fahrzeuginsassen, dessen Rumpf mit dem Bezugszeichen 7 angedeutet ist.

Ferner sind in Fig. 1a drei orthogonal zueinander angeordnete Raumachsen dargestellt, von denen die horizontal in Fahrtrichtung weisende Raumachse mit X bezeichnet ist, die vertikale Raumachse mit Z und die quer zur Fahrtrichtung weisende Raumachse mit Y. Die Achsen X und Z spannen dabei die auf den Fahrzeuginsassen bezogene Medianebene auf.

Fig. 1a zeigt die Situation vor dem Eintritt eines Unfallereignisses, bei der der Kopf 5 im lichten Abstand zur Kopfstütze 4 gehalten ist. Der Bereich der Kopfstütze 4, der in Fahrtrichtung hinter dem Kopf 5 liegt, weist eine zentrale Aufprallzone 8 auf, der in Y-Richtung nach beiden Seiten sich daran anschließende Bereich ist von seitlichen Stützflächen 8 gebildet, die zu einem Zeitpunkt vor dem Unfallereignis im Wesentlichen noch in der Ebene der Aufprallzone 8 liegen.

Demgegenüber gibt Fig. 1b einen Momentaufnahme während eines Unfallereignisses wieder. Der Kopf 5 taucht dabei im Bereich der Aufprallzone 8 in die Kopfstütze 4 ein, wobei im Zuge des Eintauchens Mittel aktiviert werden, die die kinetische Energie des Kopfes 5 aufnehmen und in eine Antriebskraft zum Aufbauen seitlicher Stützflächen 9 in X-Richtung umwandeln.

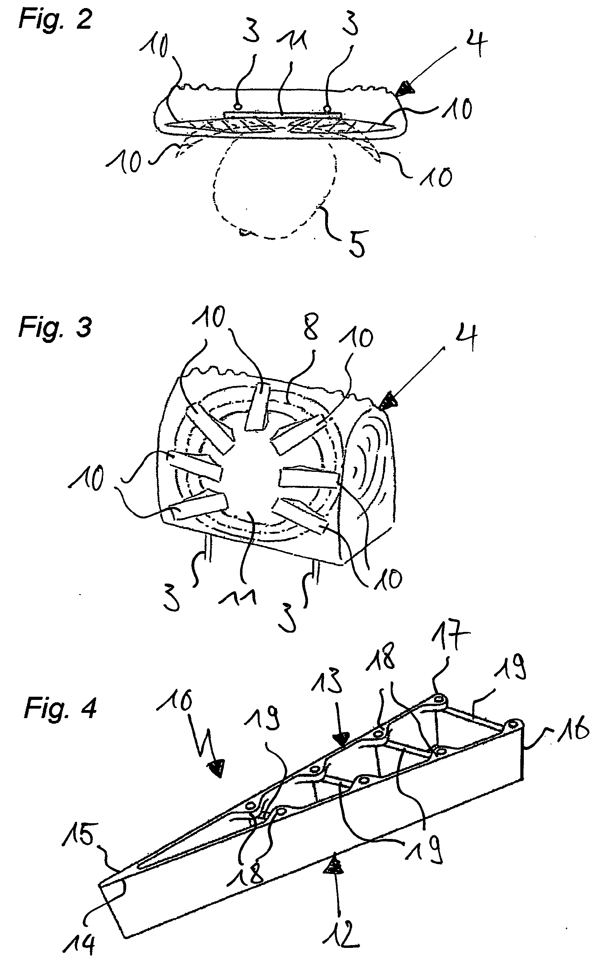

Die Fig. 2 bis 14 zeigen unterschiedliche Ausführungsformen der oben genannten Mittel, wobei allen Ausführungsformen gemein ist, dass die kinetische Energie des Kopfes 5 unmittelbar, also ohne zusätzliche Sensorik und Steuerung und ohne Zufuhr von Fremdenergie, in Antriebsenergie für die seitlichen Stützflächen 9 umgewandelt wird. Das ermöglicht eine verzögerungsfreie Stabilisierungsreaktion der Kopfstütze, so dass eine eventuelle Taumelbewegung des Kopfes frühest möglich zu einem Zeitpunkt abgefangen wird, zu dem noch keine oder nur eine minimale Überdehnung der Nackenmuskulatur stattgefunden hat. Damit kann die Gefahr eines HWS-Schleudertraumas wirksam ausgeschlossen, zumindest jedoch stark reduziert werden.

Die Fig. 2 bis 10 betreffen Ausführungsformen, die auf der Umsetzung des Fin Ray Effekts im Zusammenhang mit der Aktivierung der seitlichen Stützflächen 9 beruhen. Eine erste Ausführungsform zeigen die Fig. 2 bis 4, in denen die Kopfstütze 4 zur besseren Erkennbarkeit der erfindungsgemäßen Mittel transparent dargestellt ist. Bei dieser Ausführungsform sind mehrere fachwerkartige Stützstrukturen 10, wie sie unter Fig. 4 näher beschrieben sind, auf einer gemeinsamen, von den Halteelementen 3 getragenen Grundplatte 11 angeordnet. Die Grundplatte hat dabei eine etwa konzentrische Lage zur zentrischen Aufpralllzone 8, wobei die einzelnen fachwerkartigen Stützstrukturen 10 strahlenförmig um das Zentrum herum ausgerichtet sind, so dass ein während des Unfallereignisses in die Kopfstütze 4 eintauchender Kopf 5 eine in Richtung der X-Achse orientierte Druckkraft auf die Stützstrukturen 10 ausübt.

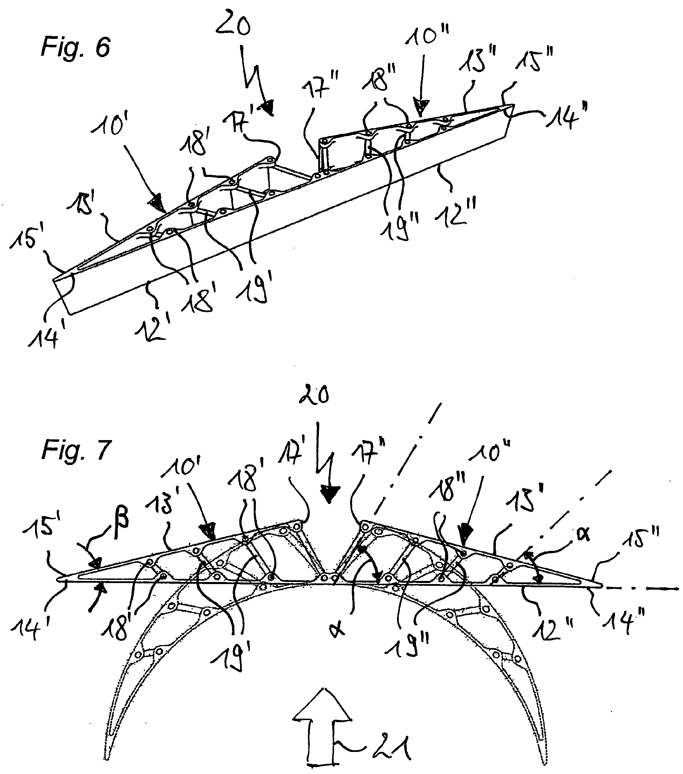

Fig. 4 zeigt eine Schrägansicht auf eine isolierte Stützstruktur 10 in ihrer Ausgangsstellung, also vor einem Unfallereignis. Die Stützstruktur 10 besitzt einen vorderen Stützgurt 12 und einen hinteren Stützgurt 13, die in Richtung ihrer in der Zeichenebene links dargestellten ersten Enden 13, 14 in einem spitzen Winkel β (Fig. 7) zusammenlaufen und dort biegesteif miteinander verbunden sind.

Der lineare Verlauf des vorderen Stützgurts 12 und hinteren Stützgurts 13 in Verbindung mit dem spitzen Winkel β führt dazu, dass der vordere Stützgurt 12 und hintere Stützgurt 13 an ihren gegenüberliegenden zweiten Enden 16, 17 in lichtem Abstand zueinander angeordnet sind. Davon abweichend ist ein Verlauf des vorderen Stützgurts 12 und/oder hinteren Stützgurts 13 mit leichter Vorkrümmung möglich, sofern auch in diesem Fall die zweiten Enden 16 und 17 in gegenseitigem Abstand zueinander enden.

An den sich gegenüberliegenden Innenseiten des vorderen Stützgurts 12 und hinteren Stützgurts 13 sind sich paarweise gegenüberliegende Drehlager 18 angeordnet, an denen jeweils Querstreben 19 angelenkt sind. Die beiden Stützgurte 12 und 13 sind durch die Drehlager 18 nicht unterbrochen, sondern laufen über diese hinweg, so dass sich im Hinblick auf das Lastabtragungssystem die Wirkung eines Durchlaufträgers einstellt. Die jeweils ein Paar bildenden Drehlager 18 weisen einen leichten Versatz in Längserstreckungsrichtung der Stützstruktur 10 auf, woraus sich eine leichte Schrägstellung der Querstreben 19 in einem Winkel α gegenüber dem vorderen Stützgurt 12 ergibt. Dabei ist die Schrägstellung derart, dass die Querstreben 19 ausgehend vom vorderen Stützgurt 12 zu den freien ersten Enden 14, 15 nach außen geneigt sind. Im vorliegenden Ausführungsbeispiel nimmt die Neigung benachbarter Querstreben 19 in Richtung zu den ersten Enden 14, 15 zu und beträgt beispielsweise bei der das zweite Ende 16, 17 bildenden Querstrebe 19 60° und der dem ersten Ende 14, 15 am nächsten liegenden Querstrebe 19 45°. Die Schrägstellung dazwischen liegender Querstreben 19 kann durch Interpolation bestimmt werden. Anstelle der Drehlager 18 können die Querstreben 19 auch über Filmgelenke an den vorderen Stützgurt 12 und hinteren Stützgurt 13 anschließen.

Die derart ausgebildeten fachwerkartigen Stützstrukturen 10 sind mit ihrem hinteren Stützgurt 13 im Bereich der zweiten Enden 16, 17 jeweils mit der Grundplatte 11 verbunden und zur Vorderseite der Kopfstütze 4 hin abgepolstert.

Taucht ein Kopf 5, wie in Fig. 2 gestrichelt dargestellt, in die Aufprallzone 8 einer Kopfstütze 4 ein, bewirkt die auf die vorderen Stützgurte 12 wirkende Druckkraft eine Verformung der Stützstrukturen 10, bei der deren ersten Enden 14, 15 jeweils entgegen der Kraftrichtung, also in Fahrtrichtung, bewegt werden und auf diese Weise zur Stabilisierung des Kopfes 5 um alle Raumachsen X, Y und Z seitliche und obere Stützflächen 9 formen.

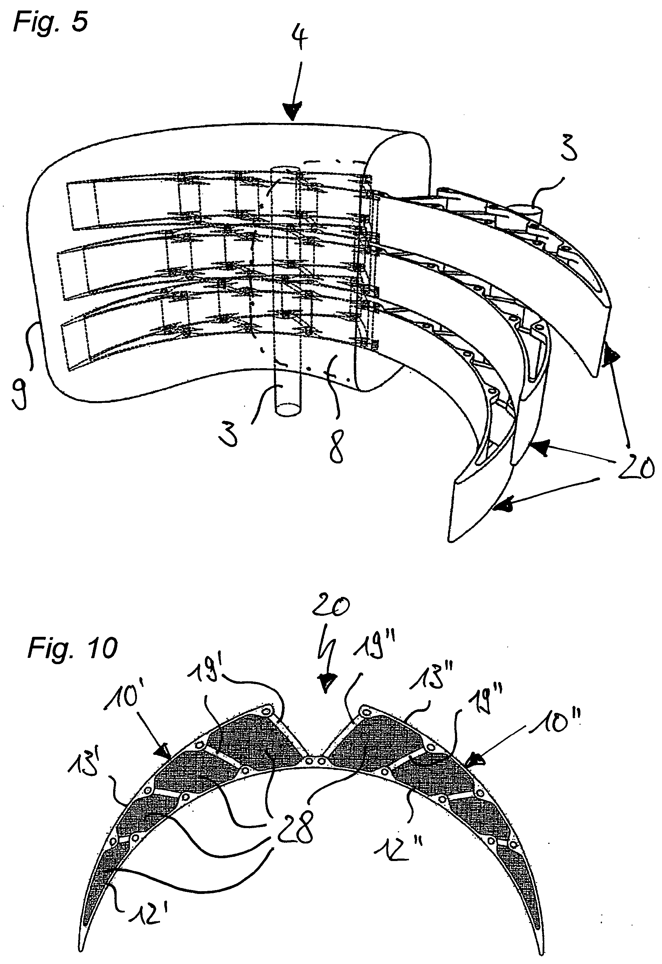

Eine darauf aufbauende Ausführungsform der Erfindung ist in den Fig. 5, 6 und 7 gezeigt. In Fig. 5 sieht man eine dementsprechende Kopfstütze 4, die in der Symmetrieebene aufgebrochen ist, um die Erfindung deutlich darstellen zu können. Die Ausführungsform gemäß der Fig. 5 bis 7 weist drei in vertikal gestaffelten horizontalen Ebenen liegende fachwerkartige Stützstrukturen 20 auf, die unter den Fig. 6 und 7 noch näher beschrieben sind. Anstelle dreier Stützstrukturen 20 können auch weniger oder mehr Stützstrukturen 20 vorgesehen sein. Die Stützstrukturen 20 können auch um die Y-Achse zum Schwerpunkt des Kopfes 5 hin geneigt sein, um einer Bewegung des Kopfes 5 um die Y-Achse entgegenzuwirken.

Die fachwerkartigen Stützstrukturen 20 können beispielsweise in die Kopfstütze 4 eingeschäumt sein, wobei sie möglichst unmittelbar vor der durch die Haltestäbe 3 versinnbildlichten Haltekonstruktion angeordnet sind. Eine solche Kopfstütze 4 bewirkt vor allem eine Stabilisierung eines Kopfes 5 bei Bewegungen um die X- und Z-Achse.

Wie vor allem aus den Fig. 6 und 7 hervorgeht, ist die fachwerkartige Stützstruktur 20 aus zwei Stützstrukturen 10', 10" gemäß der Fig. 2 bis 4 in spiegelbildlicher Anordnung zusammengesetzt, deren beide vorderen Stützgurte 12' und 12" in der Symmetrieebene, die im Normalfall mit der Medianebene zusammenfällt, in monolithischer Weise stetig ineinander übergehen, auf diese Weise also einen gemeinsamen vorderen Stützgurt 12', 12" bilden. Hingegen sind die hinteren Stützgurte 13', 13" nicht miteinander verbunden.

Aufgrund der sonstigen Übereinstimmungen mit den fachwerkartigen Stützstrukturen 10 gemäß der Fig. 2 bis 4 wird auf die dortigen Ausführungen verwiesen, insbesondere im Hinblick auf deren Geometrie.

In Fig. 7 ist in gestrichelter Darstellung die Verformung der fachwerkartigen Stützstruktur 20 während eines Unfallgeschehens gezeigt. Der vom Kopf 5 ausgeübte Druck ist durch den Pfeil 21 versinnbildlicht. Diese Kraft 21 bewirkt eine konkave Verformung des vorderen Stützgurts 20', 20", was aufgrund der Fachwerkwirkung dazu führt, dass sich die ersten Enden 14', 15' und 14", 15" symmetrisch zur Symmetrieebene entgegen der Kraft 21 bewegen, und im Zuge dieser Bewegung seitliche Stützflächen 9 in der Kopfstütze 4 aufbauen.

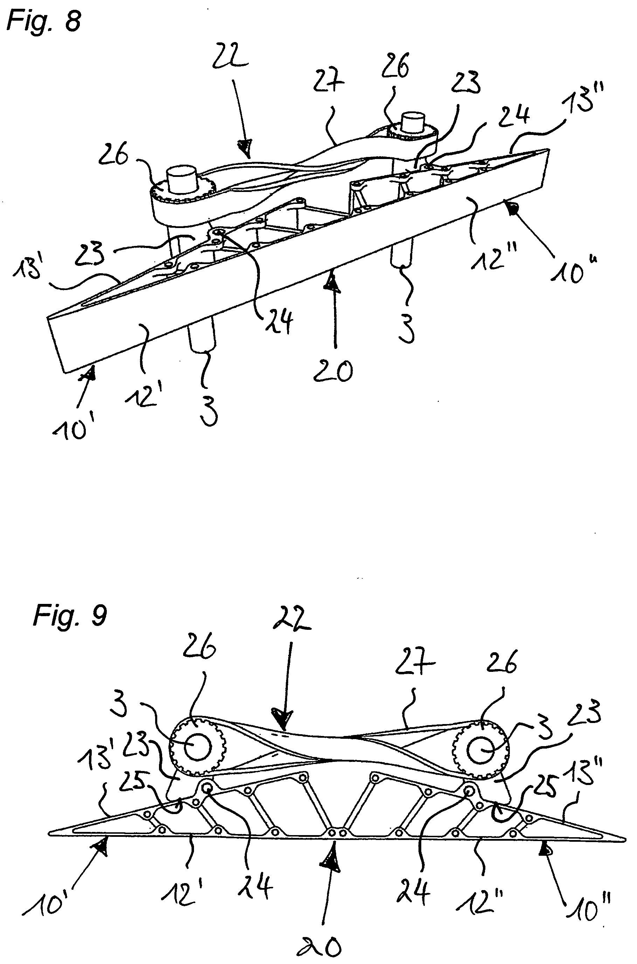

Die in Fig. 8 und 9 dargestellte Ausführungsform der Erfindung betrifft eine Weiterentwicklung der in den Fig. 5 bis 7 beschriebenen fachwerkartigen Stützstruktur 20, so dass zur Vermeidung von Wiederholungen auf die dortigen Ausführungen verwiesen wird.

Die Stützstruktur 20 gemäß der Fig. 8 und 9 ist ergänzt um einen Halte- und Synchronisationsmechanismus 22, mit dem die fachwerkartige Stützstruktur 20 an vertikalen Achsen befestigt ist, vorzugsweise an den Haltestäben 3 der Kopfstütze 4.

Der Halte- und Synchronisationsmechanismus 22 umfasst zwei Gelenkhebel 23, die mit ihrem einen Ende jeweils drehbar auf dem Haltestab 3 sitzen und mit ihrem anderen Ende über ein Drehgelenk 24 mit dem hinteren Stützgurt 13', 13" der Stützstruktur 20 verbunden sind. Im Bereich des Drehgelenks 24 weist jeder Gelenkhebel 23 einen nach außen in Richtung der ersten Enden 14', 15' bzw. 14", 15" verbreiterten Fuß 25 auf, der als Anschlag für die Schwenkbewegung dient. Im Ausgangszustand der Kopfstütze 4 liegt der Fuß 25 jeweils am hinteren Stützgurt 13', 13" an.

Zur Synchronisation der Verformungsbewegung der beiden spiegelbildlichen Teile 10' und 10" der Stützstruktur 20 im Zuge des Aufpralls des Kopfes 5 ist auf die Haltestäbe 3 jeweils ein Zahnrad 26 aufgeschoben, das starr mit den Gelenkhebeln 23 verbunden ist, beispielsweise durch einstückige Ausbildung mit diesen oder durch Verkleben, ansonsten aber mit dem Gelenkhebel 23 verdrehbar ist. Die Synchronisation bewirkt schließlich ein Zahnriemen 27, der um beide Zahnräder 26 geführt und dabei um 180° verwunden ist. Auf diese Weise ist selbst bei exzentrischem Eintauchen des Kopfes 5 in die Kopfstütze 4 eine absolut symmetrische Verformung der Stützstruktur 20 und damit ein symmetrischer Aufbau der seitlichen Stützflächen 9 gewährleistet.

Fig. 10 zeigt schließlich eine Abwandlung der in den Fig. 5 bis 9 beschriebenen fachwerkartigen Stützstruktur 20, bei der die von vorderen Stützgurten 12', 12", den hinteren Stützgurten 13', 13" und Querstreben 19', 19" gebildeten Zellen mit einem elastisch oder plastisch verformbaren und dabei energieabsorbierenden Material 28 gefüllt sind, beispielsweise mit einem Schaum, Gel oder dergleichen. Das Füllmaterial 28 bewirkt eine Dämpfung der Verformungsbewegung, wobei durch Auswahl eines geeigneten Füllmaterials 28 Einfluss auf den Geschwindigkeitsverlauf der Verformungsbewegung genommen werden kann. In Fig. 10 sind alle Zellen mit einem Material 28 gefüllt, was jedoch nicht ausschließt, dass lediglich einzelne Zellen mit einem Material 28 gefüllt sein können, während andere Zellen leer bleiben, um eine besondere Verformungscharakteristik zu erreichen. Des Weiteren ist es möglich, auch die in den Fig. 2 bis 4 beschriebenen Stützstrukturen 10 in analoger Weise zu dämpfen.

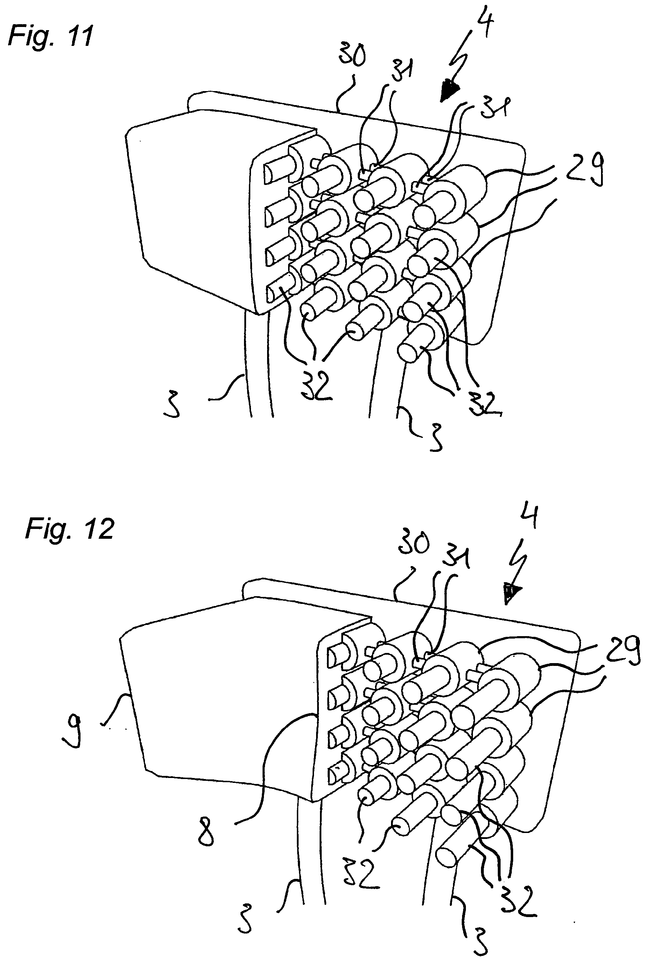

Die weiteren Ausführungsformen der Erfindung gemäß der Fig. 11 bis 14 sehen die Aktivierung der seitlichen Stützflächen 9 einer Kopfstütze 4 auf Basis mehrerer miteinander kommunizierender, fluidbefüllter Volumina vor, wobei durch Volumenverringerung eines Volumens andere Volumina zur Bildung von Stützflächen 9 anwachsen.

Zur Umsetzung dieses Gedankens ist bei einer Kopfstütze 4 gemäß der Fig. 11 und 12 eine Vielzahl von Zylinderkolbeneinheiten 29 matrizenartig auf einer Trägerplatte 30 in Fahrtrichtung weisend angeordnet. Die Trägerplatte 30 ist wiederum an den Haltestäben 3 befestigt. Die einzelnen Zylinderkolbeneinheiten 29 sind über Leitungen 31 miteinander verbunden und bilden auf diese Weise ein geschlossenes, mit einem Fluid wie zum Beispiel Öl oder Gas befülltes, kommunizierendes System, das beispielsweise in eine Kopfstütze 4 eingeschäumt sein kann. Aus Fig. 11 ist ersichtlich, dass im Ausgangszustand der Kopfstütze 4 die beweglichen Kolben 32 der Zylinderkolbeneinheiten 29 etwa zur Hälfte ein- bzw. ausgefahren sind.

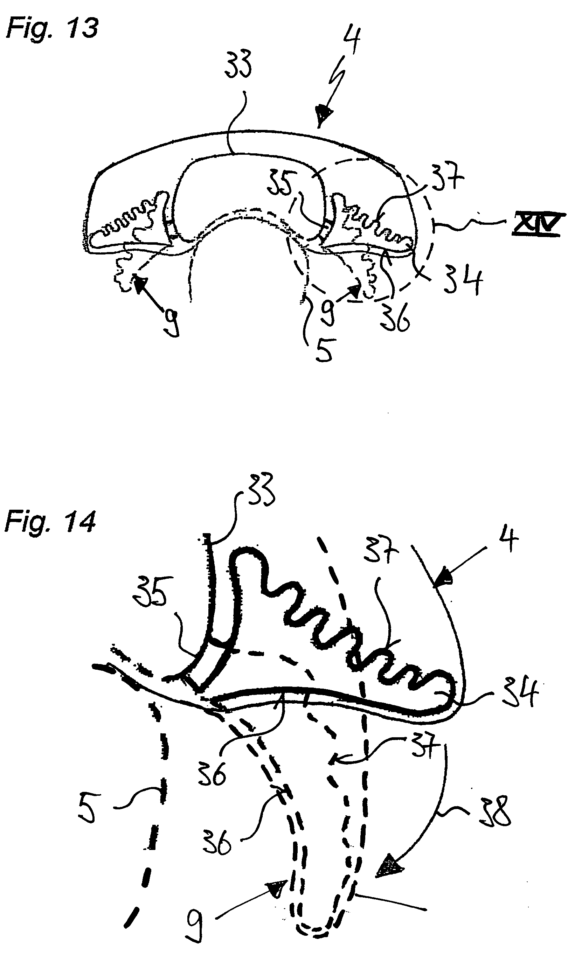

Fig. 14 gibt den Zustand der Kopfstütze 4 nach dem Eintauchen eines Kopfes 5 während eines Unfallereignisses wieder. Man sieht, dass die im Bereich der Aufprallzone 8 angeordneten Zylinderkolbeneinheiten 29 aufgrund der dort eingetragenen Kraft eingefahrene Kolben 32 aufweisen. Im Zuge der einwärts gerichteten Kolbenbewegung wird das Volumen in den Zylinderkolbeneinheiten 29 verringert und das darin befindliche Fluid über die Leitungen 31 in weniger oder nicht belastete Zylinderkolbeneinheiten 29 verdrängt. Dort werden durch den Druck des Fluids die beweglichen Kolben 32 in Fahrtrichtung linear ausgefahren und bilden aufgrund ihres anisotropen Verformungsverhaltens seitliche Stützflächen 9 aus, die einer Bewegung des Kopfes 5 um die X- und/oder Z-Achse entgegenwirken.

Schließlich zeigen die Fig. 13 und 14 eine Ausführungsform der Erfindung, bei der im Bereich der zentralen Aufprallfläche 8 ein kompressibles, mit Fluid wie zum Beispiel Öl oder Gas gefülltes Prallkissen 33 integriert ist. Seitlich des Prallkissens 33 ist jeweils ein Expansionskissen 34 angeordnet, das über Leitungen 35 an das Volumen des Prallkissens 33 angeschlossen ist. Jedes Expansionskissen 34 weist in der Draufsicht einen etwa dreieckförmigen Umriss auf mit einer ersten, dem Prallkissen 33 zugewandten Seite, einer zweiten, der Vorderseite der Kopfstütze 4 zugewandten Seite 36 und einer der Rückseite der Kopfstütze 4 zugewandten hinteren Seite 37. Die hintere Seite 37 des Expansionskissens 34 ist wellen- oder faltenförmig ausgebildet, um entlang dieser Seite 37 ein Aufweiten des Expansionskissens 34 zu ermöglichen.

Taucht der Kopf 5 eines Fahrzeuginsassen während eines Unfalls in das Prallkissen 33 ein, so wird im Zuge der damit einhergehenden Volumenabnahme des Prallkissens 33 Fluid über die Leitungen 35 in die Expansionskissen 34 gepumpt, die daraufhin eine Volumenzunahme erfahren. Da jedes Expansionskissen 34 aus einem nicht oder nur wenig dehnbaren Material bestehen, findet die Volumenvergrößerung des Expansionskissens 34 vor allem durch eine Verlängerung der hinteren Seite 37 statt, die aufgrund ihrer wellen- oder faltenförmigen Ausbildung eine behinderungsfreie Längenzunahme ermöglicht. Da die vordere Seite 36 diese Möglichkeit der Längenzunahme nicht hat, setzt mit der Volumenzunahme des Expansionskissens 34 eine durch den Pfeil 38 gekennzeichnete Schwenkbewegung des Expansionskissens 34 nach vorne in Fahrtrichtung ein, wobei die vordere Seite 36 des Expansionskissens 34 seitliche Stützflächen 9 zur Stabilisierung eines Kopfes 5 ausbildet. Dieser Zustand ist in den Fig. 13 und 14 gestrichelt dargestellt. Die Steuerung des Bewegungsverlaufes kann durch Auswahl der Viskosität der Flüssigkeit und/oder durch Vorsehen einer Drossel in der Leitung 35 erreicht werden.

Es versteht sich, dass die Erfindung nicht auf die Merkmalskombinationen der vorbeschriebenen Ausführungsformen beschränkt ist. Vielmehr liegen auch Kombinationen von Merkmalen unterschiedlicher Ausführungsformen im Rahmen der Erfindung, sofern sie sich dem Durchschnittsfachmann ohne Weiteres erschließen.

## Patentansprüche

1. Kopfstütze eines Fahrzeugsitzes (1) mit einem verformbaren zentralen Stützkörper, der die Aufprallzone (8) für den Kopf (5) eines Fahrzeuginsassen bildet und in den bei einem Unfall die kinetische Energie des Kopfes (5) eingetragen wird, und mit beidseits an den zentralen Stützkörper anschließenden seitlichen Stützflächen (9), die zur seitlichen Abstützung des Kopfes (5) aus der Ebene der Kopfstütze (4) ausstellbar sind, wobei die Kopfstütze (4) Mittel zur Aufnahme der in den zentralen Stützkörper (8) eingetragenen Energie und zur Abgabe der aufgenommenen Energie zur Aktivierung seitlicher Stützflächen (9) umfasst, **dadurch gekennzeichnet, dass** die Mittel mindestens eine fachwerkartige Stützstruktur (10) mit einem vorderen Stützgurt (12) und einem dazu nicht parallelen hinteren Stützgurt (13) umfassen, wobei das erste Ende (14) des vorderen Stützgurts (12) im spitzen Winkel (β) mit dem ersten Ende (15) des hinteren Stützgurtes (13) verbunden ist, das zweite Ende (16) des vorderen Stützgurts (12) im Abstand zum zweiten Ende (17) des hinteren Stützgurts (13) angeordnet ist und im freien Raum zwischen dem vorderen Stützgurt (12) und hinteren Stützgurt (13) Querstreben (19) angeordnet sind, die den vorderen Stützgurt (12) und den hinteren Stützgurt (13) miteinander verbinden.

2. Kopfstütze nach Anspruch 1, **dadurch gekennzeichnet, dass** die Mittel mindestens eine fachwerkartige Stützstruktur (20) mit einem vorderen Stützgurt (12', 12") und mit zwei dazu nicht parallelen hinteren Stützgurten (13', 13") umfasst, wobei die beiden Enden (14', 14") des vorderen Stützgurtes (12', 12") jeweils im spitzen Winkel (β) mit den ersten Enden (15', 15") der beiden hinteren Stützgurte (13', 13") verbunden sind und die zweiten Enden (17', 17") der beiden hinteren Stützgurte (13', 13") im Abstand zum vorderen Stützgurt (12', 12") angeordnet sind, und wobei in dem zwischen dem vorderen Stützgurt (12', 12") und den beiden hinteren Stützgurten (13', 13") eingeschlossenen freien Raum Querstreben (19', 19") angeordnet sind, die die beiden hinteren Stützgurten (13', 13") jeweils mit dem vorderen Stützgurt (12', 12") verbinden.

3. Kopfstütze nach einem der Ansprüche 1 oder 2, **dadurch gekennzeichnet, dass** jeder hintere Stützgurt (13, 13', 13") und der vordere Stützgurt (12, 12', 12") durchgehend ausgebildet sind und die Querstreben (19, 19', 19") gelenkig an jeden hinteren Stützgurt (13, 13', 13") und vorderen Stützgurt (12, 12', 12") anschließen.

4. Kopfstütze nach einem der Ansprüche 1 bis 3, **dadurch gekennzeichnet, dass** jeder hintere Stützgurt (13, 13', 13") und der vordere Stützgurt (12, 12', 12") einen Winkel α von 10° bis 25°, vorzugsweise einen Winkel β von 15° bis 20° einschließen.

5. Kopfstütze nach einem der Ansprüche 1 bis 4, **dadurch gekennzeichnet, dass** die Querstreben (19, 19', 19") und der vordere Stützgurt (12, 12', 12") einen Winkel α von 30° bis 75° einschließen, vorzugsweise einen Winkel α von 40° bis 65°.

6. Kopfstütze nach Anspruch 5, **dadurch gekennzeichnet, dass** der Winkel α zweier benachbarter Querstreben (19, 19', 19") in Richtung zum spitzen Ende der Stützstruktur (10, 20) abnimmt.

7. Kopfstütze nach einem der Ansprüche 1 bis 6, **dadurch gekennzeichnet, dass** die Mittel an zwei Achsen symmetrisch schwenkbar gelagert sind, wobei die Achsen vorzugsweise von den Haltestäben (3) gebildet sind, mit denen die Kopfstütze (4) am Fahrzeugsitz (1) befestigt ist.

8. Kopfstütze nach Anspruch 7, **dadurch gekennzeichnet, dass** die Kopfstütze (4) einen Halte- und Synchronisierungsmechanismus (22) für einen symmetrischen Gleichlauf der Mittel besitzt.

9. Kopfstütze nach einem der Ansprüche 1 bis 8, **dadurch gekennzeichnet, dass** in die fachwerkartige Stützstruktur (10, 20) ein energieabsorbierendes Material (28) integriert ist.

## Claims

1. Headrest of a vehicle seat (1) comprising a deformable, central supporting body which forms the impact zone (8) for the head (5) of a vehicle occupant and into which the kinetic energy of the head (5) is introduced during an accident, and comprising lateral supporting surfaces (9) which are connected to both sides of the central supporting body and are extendable from the plane of the headrest (4) for laterally supporting the head (5), the headrest (4) comprising means for absorbing the energy introduced into the central supporting body (8) and for outputting the absorbed energy for activating lateral supporting surfaces (9), **characterised in that** the means comprises at least one lattice-like supporting structure (10) having a front supporting flange (12) and a rear supporting flange (13) which is not parallel thereto, the first end (14) of the front supporting flange (12) being connected to the first end (15) of the rear supporting flange (13) at an acute angle (β), the second end (16) of the front supporting flange (12) being arranged at a distance from the second end (17) of the rear supporting flange (13) and cross-struts (19) which interconnect the front supporting flange (12) and the rear supporting flange (13) being arranged in the free space between the front supporting flange (12) and the rear supporting flange (13).

2. Headrest according to claim 1, **characterised in that** the means comprises at least one lattice-like supporting structure (20) having a front supporting flange (12', 12") and having two rear supporting flanges (13', 13") which are not parallel thereto, the two ends (14', 14") of the front supporting flange (12', 12") each being connected to the first ends (15', 15") of the two rear supporting flanges (13', 13") at an acute angle (β) and the second ends (17', 17") of the two rear supporting flanges (13', 13") being arranged at a distance from the front supporting flange (12', 12"), and cross-struts (19', 19") which each connect the two rear supporting flanges (13', 13") to the front supporting flange (12', 12") being arranged in the enclosed free space between the front supporting flange (12', 12") and the two rear supporting flanges (13', 13").

3. Headrest according to either claim 1 or claim 2, **characterised in that** each rear supporting flange (13, 13', 13") and the front supporting flange (12, 12', 12") have a continuous design and the cross-struts (19, 19', 19") are connected to each rear supporting flange (13, 13', 13") and front supporting flange (12, 12', 12") in an articulated manner.

4. Headrest according to any of claims 1 to 3, **characterised in that** each rear supporting flange (13, 13', 13") and the front supporting flange (12, 12', 12") enclose an angle α of 10° to 25°, preferably an angle β of 15° to 20°.

5. Headrest according to any of claims 1 to 4, **characterised in that** the cross-struts (19, 19', 19") and the front supporting flange (12, 12', 12") enclose an angle α of 30° to 75°, preferably an angle α of 40° to 65°.

6. Headrest according to claim 5, **characterised in that** the angle α of two adjacent cross-struts (19, 19', 19") decreases towards the pointed end of the supporting structure (10, 20).

7. Headrest according to any of claims 1 to 6, **characterised in that** the means are mounted on two shafts in a symmetrically pivotable manner, the shafts preferably being formed by the retaining rods (3) by means of which the headrest (4) is fastened to the vehicle seat (1).

8. Headrest according to claim 7, **characterised in that** the headrest (4) has a retaining and synchronising mechanism (22) for symmetrical synchronising of the means.

9. Headrest according to any of claims 1 to 8, **characterised in that** an energy-absorbing material (28) is integrated into the lattice-like supporting structure (10, 20).

## Revendications

1. Appui-tête d'un siège (1) de véhicule, comprenant un corps central d'appui apte à la déformation, qui matérialise la zone d'impact (8) affectée à la tête (5) d'un occupant du véhicule et dans lequel l'énergie cinétique de ladite tête (5) est introduite lors d'un accident ; et des surfaces latérales d'appui (9) qui se rattachent de part et d'autre audit corps central d'appui et peuvent être déployées hors du plan de l'appui-tête (4), afin de procurer un appui latéral à ladite tête (5), ledit appui-tête (4) étant pourvu de moyens conçus pour absorber l'énergie introduite dans ledit corps central d'appui (8) et pour céder l'énergie absorbée, en vue de l'activation de surfaces latérales d'appui (9), **caractérisé par le fait que** les moyens comprennent au moins une structure d'appui (10) du type treillis comportant une membrure antérieure d'appui (12) et une membrure postérieure d'appui (13) non parallèle à cette dernière, la première extrémité (14) de la membrure antérieure d'appui (12) étant reliée à angle aigu (β) à la première extrémité (15) de la membrure postérieure d'appui (13), la seconde extrémité (16) de ladite membrure antérieure d'appui (12) étant placée à distance de la seconde extrémité (17) de ladite membrure postérieure d'appui (13) et des entretoises (19), disposées dans l'espace libre situé entre la membrure antérieure d'appui (12) et la membrure postérieure d'appui (13), reliant l'une à l'autre ladite membrure antérieure d'appui (12) et ladite membrure postérieure d'appui (13).

2. Appui-tête selon la revendication 1, **caractérisé par le fait que** les moyens comprennent au moins une structure d'appui (20) du type treillis comportant une membrure antérieure d'appui (12', 12") et deux membrures postérieures d'appui (13', 13") non parallèles à cette dernière, les deux extrémités (14', 14") de la membrure antérieure d'appui (12', 12") étant respectivement reliées, à angle aigu (β), aux premières extrémités (15', 15") des deux membrures postérieures d'appui (13', 13"), les secondes extrémités (17', 17") desdites deux membrures postérieures d'appui (13', 13") étant placées à distance de ladite membrure antérieure d'appui (12', 12") et des entretoises (19', 19"), disposées dans l'espace libre inclus entre la membrure antérieure d'appui (12', 12") et les deux membrures postérieures d'appui (13', 13"), assurant respectivement la liaison desdites deux membrures postérieures d'appui (13', 13") et de ladite membrure antérieure d'appui (12', 12").

3. Appui-tête selon l'une des revendications 1 ou 2, **caractérisé par le fait que** chaque membrure postérieure d'appui (13, 13', 13") et la membrure antérieure d'appui (12, 12', 12") sont de réalisation ininterrompue et les entretoises (19, 19', 19") se rattachent, de manière articulée, à chaque membrure postérieure d'appui (13, 13', 13") et à ladite membrure antérieure d'appui (12, 12', 12").

4. Appui-tête selon l'une des revendications 1 à 3, **caractérisé par le fait que** chaque membrure postérieure d'appui (13, 13', 13"), et la membrure antérieure d'appui (12, 12', 12"), décrivent un angle α de 10° à 25°, de préférence un angle β de 15° à 20°.

5. Appui-tête selon l'une des revendications 1 à 4, **caractérisé par le fait que** les entretoises (19, 19', 19"), et la membrure antérieure d'appui (12, 12', 12"), décrivent un angle α de 30° à 75°, de préférence un angle α de 40° à 65°.

6. Appui-tête selon la revendication 5, **caractérisé par le fait que** l'angle α, entre deux entretoises (19, 19', 19") voisines, décroît en direction de l'extrémité pointue de la structure d'appui (10, 20).

7. Appui-tête selon l'une des revendications 1 à 6, **caractérisé par le fait que** les moyens sont montés à pivotement symétrique suivant deux axes, lesdits axes étant matérialisés, de préférence, par les barreaux de retenue (3) à l'aide desquels ledit appui-tête (4) est fixé au siège (1) du véhicule.

8. Appui-tête selon la revendication 7, **caractérisé par le fait que** ledit appui-tête (4) présente un mécanisme (22) de retenue et de synchronisation, en vue d'un fonctionnement synchrone et symétrique des moyens.

9. Appui-tête selon l'une des revendications 1 à 8, **caractérisé par le fait qu'**un matériau (28), absorbant l'énergie, est intégré dans la structure d'appui (10, 20) du type treillis.
